# EUROPÄISCHE PATENTSCHRIFT

(11) **EP 1 819 945 B1**
(45) Veröffentlichungstag und Bekanntmachung des Hinweises auf die Patenterteilung: **19.01.2011**
(21) Anmeldenummer: 05807730.6
(22) Anmeldetag: 10.11.2005
(51) Int. Cl.: F16H 7/18

(54) **ÖLFÜHRUNG AN SPANN- UND FÜHRUNGSSCHIENEN**
OIL SUPPLY SYSTEM FOR SUPPLYING OIL TO SLIDE RAILS AND GUIDE RAILS
AMENEE D'HUILE DANS DES RAILS TENDEURS ET DES RAILS DE GUIDAGE

(30) Priorität: 08.12.2004 DE 102004058948
(43) Veröffentlichungstag der Anmeldung: 22.08.2007
(73) Patentinhaber: Schaeffler Technologies GmbH & Co. KG, 91074 Herzogenaurach (DE)
(72) Erfinder: PFLUG, Rainer, 91560 Heilsbronn (DE); SCHRÖDER, Christoph, 91074 Herzogenaurach (DE); ASSEL, Martin, 91593 Burgbernheim (DE)
(86) Internationale Anmeldenummer: PCT/EP2005/012024
(87) Internationale Veröffentlichungsnummer: WO 2006/061075

(56) Entgegenhaltungen:
- DE-A1- 10 230 739
- PATENT ABSTRACTS OF JAPAN Bd. 1995, Nr. 10, 30. November 1995 (1995-11-30) -& JP 07 167264 A (TOYOTA MOTOR CORP), 4. Juli 1995 (1995-07-04)
- PATENT ABSTRACTS OF JAPAN Bd. 1997, Nr. 03, 31. März 1997 (1997-03-31) & JP 08 303541 A (HOKUSHIN IND INC), 19. November 1996 (1996-11-19)
- PATENT ABSTRACTS OF JAPAN Bd. 1999, Nr. 12, 29. Oktober 1999 (1999-10-29) & JP 11 190398 A (FUJI HEAVY IND LTD), 13. Juli 1999 (1999-07-13)
- PATENT ABSTRACTS OF JAPAN Bd. 2002, Nr. 04, 4. August 2002 (2002-08-04) & JP 2001 349400 A (HONDA MOTOR CO LTD), 21. Dezember 2001 (2001-12-21)
- PATENT ABSTRACTS OF JAPAN Bd. 1997, Nr. 01, 31. Januar 1997 (1997-01-31) & JP 08 233041 A (AISIN SEIKI CO LTD), 10. September 1996 (1996-09-10)
- PATENT ABSTRACTS OF JAPAN Bd. 2003, Nr. 12, 5. Dezember 2003 (2003-12-05) & JP 2003 329092 A (HONDA MOTOR CO LTD), 19. November 2003 (2003-11-19)
- PATENT ABSTRACTS OF JAPAN Bd. 2003, Nr. 11, 5. November 2003 (2003-11-05) & JP 2003 214504 A (TSUBAKIMOTO CHAIN CO), 30. Juli 2003 (2003-07-30)
- PATENT ABSTRACTS OF JAPAN Bd. 2003, Nr. 01, 14. Januar 2003 (2003-01-14) & JP 2002 266957 A (GATES UNITTA ASIA CO), 18. September 2002 (2002-09-18)

## Beschreibung

### Gebiet der Erfindung

Die vorliegende Erfindung betrifft eine Schiene für einen Zugmitteltrieb, die als Spannschiene oder Führungsschiene ausgebildet, zur Anlage an einem Zugmittel vorgesehen ist. Derartige Spann- oder Führungsschienen werden insbesondere genutzt, um in Zugmitteltrieben eine Kette oder einen Riemen zu spannen. Zur Erzielung einer verbesserten Führung des Zugmittels an der dazu vorgesehenen Kontaktfläche der Schiene ist diese seitlich von Borden begrenzt.

### Hintergrund der Erfindung

Schienen der zuvor beschriebenen Bauart finden vielfältige Anwendung, insbesondere in Zugmitteltrieben von Brennkraftmaschinen. Für kraftübertragende bzw. drehmomentübertragende Zugmittel werden derartige Schienen eingesetzt, um stets eine für die Funktion des Zugmitteltriebs ausreichende Vorspannung zu gewährleisten. Derartige Schienen sind üblicherweise an einem ortsfest positionierten Bolzen schwenkbar angeordnet, zur Bildung eines Drehlagers. Versetzt zu dem Drehlager ist der Schiene ein Spannelement zugeordnet, beispielsweise eine Druckfeder oder eine hydraulisch arbeitende Vorrichtung. Die hydraulisch wirkende Vorrichtung umfasst einen Kolben, der von einem hydraulischen Druckfluidmittel beaufschlagt auf die Schiene eine Kraft ausübt, um so die Spannung des Zugmittels zu erhöhen. Gleichzeitig schließt die hydraulische Spannvorrichtung eine als Druckbegrenzung wirkende Einrichtung ein, die ein Überschreiten eines definierten Drucks verhindert.

Die DE 42 12 309 A1 zeigt eine Schiene, mit dem ein Zugmittel eines Zugmitteltriebs vorgespannt wird. Der Aufbau umfasst ein als Armteil bezeichnetes Trägerelement, das mit einem die Funktion eines .Gleitelementes ausübenden Schuh verbunden ist. Im Betriebszustand ist die Schiene über den Schuh unmittelbar an dem Zugmittel abgestützt. Der unmittelbar mit dem Zugmittel in Verbindung stehende Schuhs ist aus Kunststoff hergestellt. Aufgrund der kraftschlüssig über den Schuh an dem Zugmittel abgestützten Schiene ist diese unabhängig von den Schmierstoffverhältnissen einem Verschleiß unterworfen. Zur Verschleißkompensation wird die Schiene über ein Federmittel nachführt, wobei sich mit zunehmenden Verschleiß eine verringerte Vorspannkraft einstellt, mit der die Schiene an dem Zugmittel anliegt. Dabei kann sich ein kritischer Verschleißzustand der Schiene und des damit verbundenen Gleitelementes ergeben, sobald die sich einstellende Vorspannkraft, die für die Funktion des Zugmitteltriebs erforderliche Vorspannkraft unterschreitet. Die verringerte Vorspannkraft führt gleichzeitig zu mit einem erhöhten Schlupf des Riemens. Bei Kettentrieben kann eine nicht ausreichende Vorspannkraft des Spannsystems zu einem Kettensprung zwischen einem Kettenrad und der Kette kommen, was bei Steuertrieben, einem zum Antrieb einer Nockenwelle bestimmten Zugmitteltrieb, einen Folgeschaden auslöst.

Aus der DE 102 30 739 A1 ist eine Schiene mit den Merkmale des Oberbegriffes des Anspruchs 1 bekannt.

### Zusammenfassung der Erfindung

Der vorliegenden Erfindung liegt die Aufgabe zugrunde, eine Schiene für einen Zugmitteltrieb zu schaffen, mit der eine verringerte Reibung zwischen dem Zugmittel und der Schiene realisierbar ist.

Die Lösung dieser Problemstellung wird durch die Merkmale des Anspruchs 1 gelöst. Danach bildet die erfindungsgemäße Spannschiene bzw. Führungsschiene im Betriebszustand eine von einem Schmiermittel benetzte U-förmige Aufnahme, wodurch das Zugmittel auf einem Schmiermittelfilm weitestgehend kontaktlos zu der Schiene geführt ist. Die Schmiermittelführung erfolgt dabei so, dass sich zwischen dem Zugmittel und der Führungsfläche der Schiene ein von dem Schmiermittel gebildeter Druckspalt einstellt. Zusätzlich ist die Schiene maßlich so an die Breite des Zugmittels angepasst, dass sich jeweils beidseitig zwischen dem Zugmittel und dem Bord der Schiene ein definiertes Spaltmaß in Form eines mit dem Schmiermittel gefüllten Leckspaltes einstellt.

Der seitliche Leckspalt zwischen den Borden der Schiene und dem Zugmittel in Verbindung mit einem Druckspalt, der sich zwischen der Führungsfläche und der Innenseite des Zugmittels einstellt, bewirkt die Bildung eines druckkammerähnlichen Gebildes im Bereich der U-förmigen Aufnahme.

Vorteilhaft erstreckt sich die U-förmige Aufnahme und damit die Druckkammer über die gesamte Länge der Schiene, wodurch das Zugmittel hydrodynamisch aufschwimmt, ohne radialen und axialen Kontakt zur der Schiene. Damit stellt sich eine nahezu reibungsfreie Führung des Zugmittels im Bereich der Schiene ein, was sich vorteilhaft auf den Verschleiß einerseits und die Lebensdauer des Zugmittels andererseits auswirkt. Für eine mit einem derartigen reibungsmindernden Zugmitteltrieb ausgerüstete Brennkraftmaschine, stellt sich damit außerdem ein verbesserter Wirkungsgrad ein.

Weitere vorteilhafte Ausgestaltungen der Erfindung sind Gegenstand der abhängigen Ansprüche 2 bis 18.

Gemäß einer bevorzugten Ausgestaltung der Erfindung wird das Schmiermittel in einer von der Führungsfläche der Schiene und dem Zugmittel radial begrenzten Zone der U-förmige Aufnahme zugeführt. Vorteilhaft kann durch den Druck des Schmiermittels unmittelbar Einfluss auf den Druckspalt, d. h. die sich einstellende Druckspalthöhe genommen werden, der unmittelbar die Vorspannung des Zugmittels beeinflusst. Die erfindungsgemäße Führungsschiene, mit der gleichzeitig die Vorspannung des als Riemen gestalteten Zugmittels beeinflussbar ist, benötigt vorteilhaft kein weiteres, separates Spannsystem. Damit stellt sich zusätzlich ein Kostenvorteil der erfindungsgemäßen Schiene ein.

Eine weitere Ausgestaltung der Erfindung schließt eine strukturierte Führungsfläche der Schiene ein. Die Struktur der Schiene ermöglicht eine gewollte verbesserte Ölanhaftung an der Führungsfläche, verbunden mit einem reduzierten Reibwert zwischen dem Zugmittel und der Schiene.

Weiterhin schließt die Erfindung ein, die Führungsfläche der Schiene mit einer Makrostruktur zu versehen, die ähnlich der Oberfläche von Golfbällen gestaltet ist. Bevorzugt bietet sich dazu eine schuppenartig auf die Führungsfläche aufgebrachte Makrostruktur an, um die Schmiermittelanhaftung zu verbessern, verbunden mit einem verringerten Reibwert zwischen dem Zugmittels und der Schiene.

Alternativ oder zusätzlich schließt die Erfindung ein, das Zugmittel bevorzugt innenseitig, d.h. auf der zur Schiene gerichteten Seite mit einer Makrostruktur zu versehen. Über die Makrostruktur des Zugmittels wird stets Schmiermittel in die Kontaktzone zwischen Schiene und Zugmittel gefördert, verbunden mit einer gewünschten Reibwertreduzierung.

Vorzugsweise wird als Schmiermittel für die Schiene und das Zugmittel das Schmieröl der Brennkraftmaschine eingesetzt, welches über die Druckumlaufschmierung zugeleitet werden kann. Dazu bietet es sich an, das Schmiermittel versetzt zur Stirnseite der Schiene, unter Berücksichtigung der Drehrichtung des Zugmittels in die U-förmige Aufnahme einzuleiten.

Als Maßnahme um das Schmiermittel gleichmäßig zwischen der Schiene und der Innenseite des als Riemen ausgebildeten Zugmittels einzubringen ist die Führungsfläche der Schiene mit zumindest einer Schmiermittelnut versehen. Dabei erstreckt sich die Schmiermittelnut nahezu über die gesamte Länge der Schiene, wobei jeweils zu den Stirnseiten ein nutfreier Abstand eingehalten wird, damit das unter Druck stehende Schmiermittel nicht drucklos aus dem druckkammerartigen Gebilde entweichen kann.

Alternativ zu einer der Druckumlaufschmierung der Brennkraftmaschine angeschlossenen Schmiermittelzuführung der Schiene, ist die Erfindung weiterhin übertragbar auf Schienen, bei denen die Schmiermittelversorgung über Spritzdüsen erfolgt. Dazu ist die Schiene mit einem sogenannten Schmiermittelsammler versehen, einem breitflächigen Eintritt der Schmiermittelnut , der eine Aufweitung des in die Führungsfläche eingebrachten Schmiermittelnut darstellt. Im Betriebszustand ist die Schmiermitteldüse so ausgerichtet, dass diese gezielt das Schmiermittel in den dafür vorgesehenen Sammer der Schiene einbringt. Im Betriebszustand wird das Schmiermittel von einem Schmiermittelkeil, der sich zwischen der Schiene und dem Zugmittel bildet, kontinuierlich in den sich verengenden Spalt im Bereich der Schiene weitergeleitet, wodurch sich das Zugmittel ebenfalls gegenüber der Schiene hydrodynamisch aufschwimmt.

Eine weitere vorteilhafte Ausgestaltung der Erfindung sieht vor, ein oder mehrere Längsrillen, in Verbindung mit Querrillen in die Führungsfläche der Schiene einzubringen, über die das Schmiermittel breitflächig verteilt werden kann. Die Anzahl sowie die Gestaltung der Rillen wird dabei vorzugsweise durch Versuche ermittelt, zur Erzielung eines Optimums zwischen der eingeleiteten Schmiermittelmenge einerseits und dem sich damit ergebenden Druckaufbau zwischen der Schiene und dem Zugmittel andererseits.

Eine wirksame Schmiermittelzuführung kann außerdem über ein Drehlager der Schiene erfolgen, welches einem Schienenende zugeordnet ist, um das die Schiene schwenkbar ist. Von dem Drehlager, welches bevorzugt mit der Druckumlaufschmierung der Brennkraftmaschine in Verbindung steht, gelangt das Schmiermittel beispielsweise über zumindest eine Schmiermittelbohrung bzw. einen Schmiermittelkanal zu der Führungsfläche, der U-förmigen Aufnahme der Schiene. Die Verteilung des Schmiermittels verbessernd, mündet die Schmiermittelbohrung bevorzugt in eine Schmiermittelnut der Führungsfläche.

Ein weiteres Gestaltungsmerkmal der Erfindung betrifft die Borde, an denen das Zugmittel seitlich geführt ist. Das erfindungsgemäße vorteilhafte hydrodynamische Aufschwimmen des Zugmittels im Bereich der u-förmig gestalteten Schiene wird unmittelbar von dem Spaltmaß bestimmt, das sich jeweils beidseitig des Zugmittels und den Borden der Schiene einstellt. Über das Spaltmaß, das auch als Leckspalt zu bezeichnen ist, wird im Betriebszustand stets eine Schmiermittelmenge abgeführt, verbunden mit einem Druckabbau. Über die Höhe der Schienenborde sowie die Breite des Spaltmaßes ist dieser Druckabbau beeinflussbar. Vorteilhaft wird die Bordhöhe an eine Zahnflusshöhe des als Riemen ausgebildeten Zugmittels angepasst. Eine solche Bordhöhe vermeidet einen Zugmittelkontakt im Bereich der Profilierung bzw. der Verzahnung mit dem Bord der Schiene, was den Verschleiß und die Reibung verringert.

Die Erfindung ermöglicht die Verwendung einer einteiligen Schiene, beispielsweise aus Aluminium-Guss preiswert hergestellbare Schienen. Die erfindungsgemäßen Maßnahmen bewirken eine deutlich reduzierte Reibung zwischen den Kontaktpartnern, der Schiene und dem Zugmittel, wodurch eine einteilige, aus einem Werkstoff hergestellte Schiene einsetzbar ist.

Alternativ dazu ist die Erfindung ebenfalls auf herkömmlich aufgebaute Schienen übertragbar, beispielsweise auf Schienen mit einem aus Aluminium hergestellten Grundkörper, an dem formschlüssig ein Gleitkörper aus Kunststoff befestigt ist. Dazu ist die Führungsfläche des Gleitkörpers mit zumindest einem Schmiermittelkanal oder zumindest einer Schmiermittelnut versehen, entsprechend den zuvor erläuterten Ausgestaltungen und Wirkungen.

Die Wirksamkeit der erfindungsgemäßen Schiene erfordert die Einhaltung von durch Versuche empirisch ermittelten Maßen. Als Spaltmaß bzw. als Maß für den Leckspalt, der sich beidseitig des Zugmittels zu den Borden der Schiene ergibt, ist ein Wert "s" von ≤ 0,3 mm vorgesehen. Das Zusammenwirken des Zugmittels in Verbindung mit der erfindungsgemäß gestalteten Schiene ergibt einen Druckspalt "h", der sich zwischen der Führungsfläche der Schiene und dem Zugmittel einstellt und erfindungsgemäß ≥ 0,1 mm beträgt.

Weiterhin ist gemäß der Erfindung vorgesehen, die Borde der Schiene jeweils endseitig so auszubilden, dass diese jeweils einen nach außen entgegengesetzt spreizenden Bereich bilden. Diese Maßnahme ermöglicht auch bei einer nicht optimal zu dem Zugmittel ausgerichteten Schiene eine dauerhafte zerstörungsfreie und gleichzeitig reibungsmindernde Führung des Zugmittels in der Schiene. Außerdem ist die Führungsfläche der Schiene an beiden Enden, zumindest jedoch im Einlaufbereich des Zugmittels mit einem zur Zugmittelführung abweichend stärker gerundeten Bereich versehen, der sich ebenfalls reibungsmindernd auswirkt.

### Kurze Beschreibung der Zeichnungen

Die Erfindung wird anhand von sechs Zeichnungen näher erläutert. Es zeigen:
- Figur 1: in einer Schnittansicht den Aufbau der erfindungsgemäßen Schiene in Verbindung mit einem Zugmittel;
- Figur 2: in einer Perspektive die erfindungsgemäße Schiene als Einzelteil;
- Figur 3: einen Ausschnitt der in Figur 2 dargestellten Schiene in ei- nem vergrößerten Maßstab sowie mit einem Schmiermittel- sammler;
- Figur 4: in einem Längsschnitt eine erfindungsgemäße Schiene, die an dem Zugmittel abgestützt ist;
- Figur 5: eine Prinzipskizze, die einen Druckaufbau des Schmiermit- tels im Bereich der Schiene innenseitig des Zugmittels dar- stellt;
- Figur 6: den Aufbau eines bekannten Zugmitteltriebs in Verbindung einer Schiene, mit der das Zugmittel vorgespannt wird.

### Ausführliche Beschreibung der Zeichnungen

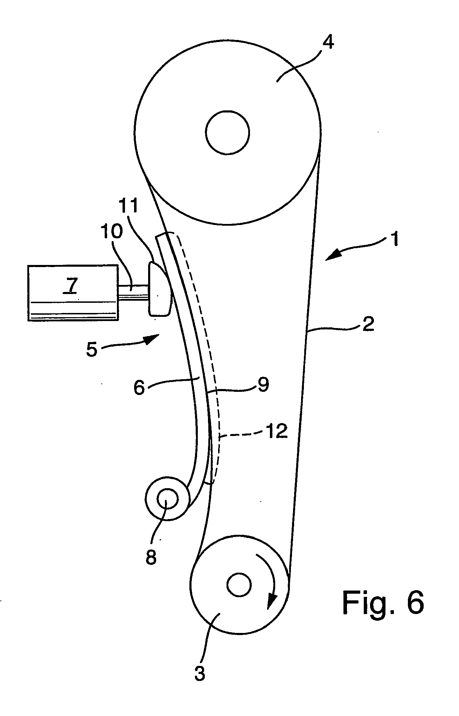

Um die Erfindung näher zu erläutern, wird zunächst auf die Figur 6 Bezug genommen, die einen bekannten Zugmitteltrieb 1 darstellt,. Der Zugmitteltrieb 1 umfasst ein Zugmittel 2, beispielsweise einen Riemen, welcher das Abtriebsorgan 3 mit dem Antriebsorgan 4 verbindet. Dem im Uhrzeigersinn umlaufenden Zugmitteltrieb 1 ist an dem Leertrum ein Spannsystem 5 zugeordnet, bestehend aus einer Schiene 6 und einem Federmittel 7. Die um ein Drehlager 8 schwenkbare Schiene 6 stützt sich mit einer gewölbt gestalteten Führungsfläche 9 unmittelbar an dem Zugmittel 2 ab. An dem vom Drehlager 8 entgegengesetzten Ende steht die Schiene 6 mit dem Federmittel 7 in Verbindung, das stets eine Vorspannkraft auf die Schiene 6 leitet und damit das Zugmittel 2 vorspannt. Als Federmittel 7 ist dazu beispielsweise ein von einer Druckfeder kraftbeaufschlagter Stößel 10 vorgesehen, welcher mittels einer konvexen Stirnfläche 11 unmittelbar an der Schiene 6 abgestützt ist. Zur verbesserten Führung des Zugmittels 2 an der Schiene 6 weist diese axial zueinander versetzte Borde 12 auf, zwischen denen das Zugmittel 2 geführt ist.

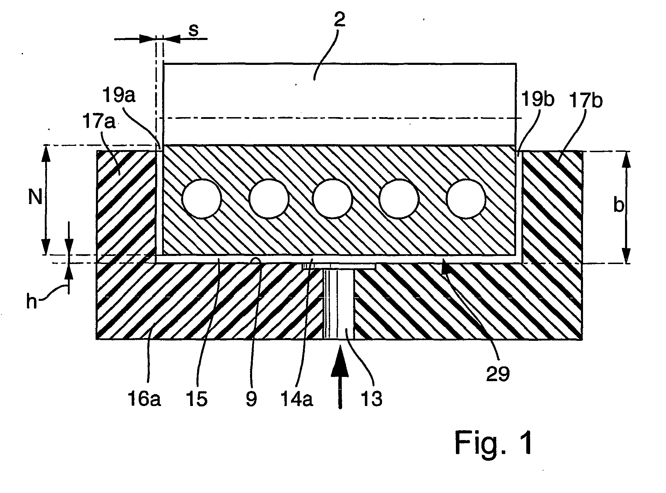

Die Figur 1 zeigt den Aufbau einer erfindungsgemäßen Schiene 16a in Verbindung mit dem Zugmittel 2. Die Schiene 16a gemäß der Erfindung vermeidet im Betriebszustand eine direkte Anlage des Zugmittels 2 an der Führungsfläche 9. Dazu wird ein Schmiermittel, insbesondere ein Schmieröl der Brennkraftmaschine mittels einer Druckumlaufschmierung über einen mittig in die Schiene 6 eingebrachten Schmiermittelkanal 13 in die U-förmige Aufnahme 29 eingeleitet. Von dem Schmiermittelkanal 13 tritt das Schmiermittel in eine Schmiermittelnut 14a ein, bevor das Schmiermittel breitflächig in einen Druckspalt 15 gelangt, der sich über die gesamte Breite des Zugmittels 2 erstreckt und der beidseitig von den Borden 17a, 17b begrenzt ist. Bedingt durch den Druck des Schmiermittels kommt es zu einem Aufschwimmen des Zugmittels 2 gegenüber der Führungsfläche 9. Der Druckspalt 15, gekennzeichnet durch das Maß "h" reduziert entscheidend die Reibung zwischen dem Zugmittel 2 und der Schiene 16a. Zur Beeinflussung eines Schmiermittelaustritts aus dem Druckspalt 15 ist weiterhin zwischen den Borden 17a, 17b und den Seitenflächen 18a, 18b des Zugmittels 2 ein Leckspalt 19a, 19b vorgesehen. Die Leckspaltbreite bzw. das Spaltmaß "s", ist dabei so gewählt, dass einerseits ein ungehinderter schneller Schmiermittelaustritt aus dem Druckspalt 15 unterbunden ist und andererseits eine Reibung zwischen den Borden 17a, 17b und den Seitenflächen 18a, 18b des Zugmittels unterbleibt. Neben einer Abstimmung des Leckspaltes 19a, 19b ist die Schiene 16a weiterhin so ausgebildet dass eine Bordhöhe "b" der Borde 17a, 17b eine Zahnfußhöhe "z" des Zugmittels 2 nicht überschreitet. Die U-förmige Aufnahme 29 der Schiene 16a in Verbindung mit dem Zugmittel 2 begrenzen im Betriebszustand einen mit Schmierstoff gefüllten Druckraum.

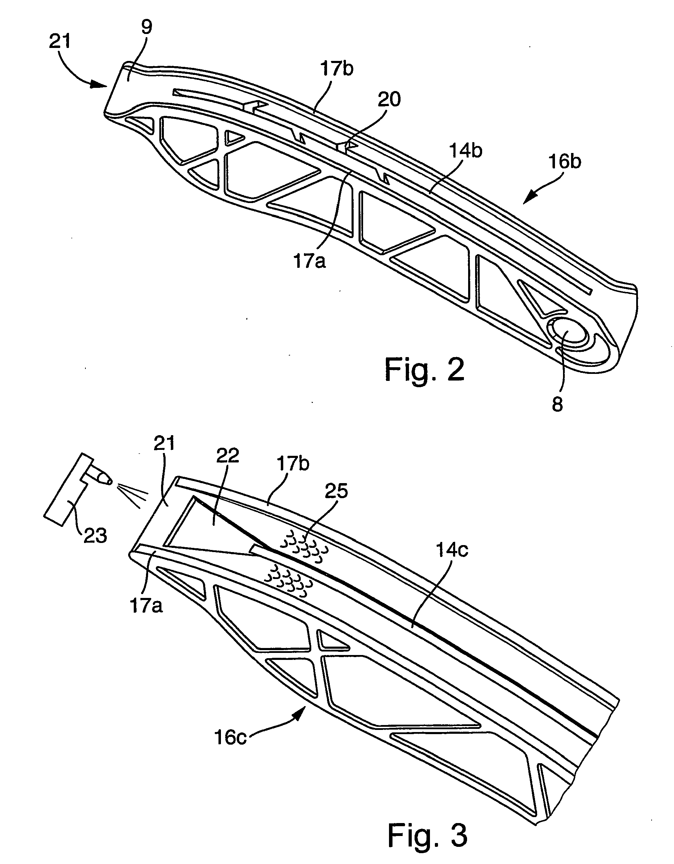

Die Figur 2 zeigt die erfindungsgemäße Schiene 16b in einer Perspektive. Die Führungsfläche 9 ist mit einer mittigen sich nahezu über die gesamte Länge der Schiene 16b erstreckenden Schmiermittelnut 16b versehen, von der ausgehend sich versetzte schräg ausgebildete Querrillen 20 anschließen. Die Querrillen 20 haben die Aufgabe, das unter Druck stehende Schmiermittel von der Schmiermittelnut 14b breitflächig auf die Führungsfläche 9 zu verteilen, um einen gewünschten Druckspalt 15 zu erzeugen. Die Borde 17a, 17b sind an beiden Enden, d. h. sowohl an dem Drehlager 8 zugewandten Ende als auch in einer Eintrittszone 21 des Zugmittels 2 an der Schiene 16b jeweils entgegengesetzt zueinander nach außen gespreizt. Diese Maßnahme bewirkt eine verbesserte Zugmittelführung und ermöglicht einen Toleranzausgleich, falls im Betriebszustand beispielsweise die Schiene 16b nicht winkelgerecht zu dem Verlauf des Zugmittels 2 ausgerichtet ist.

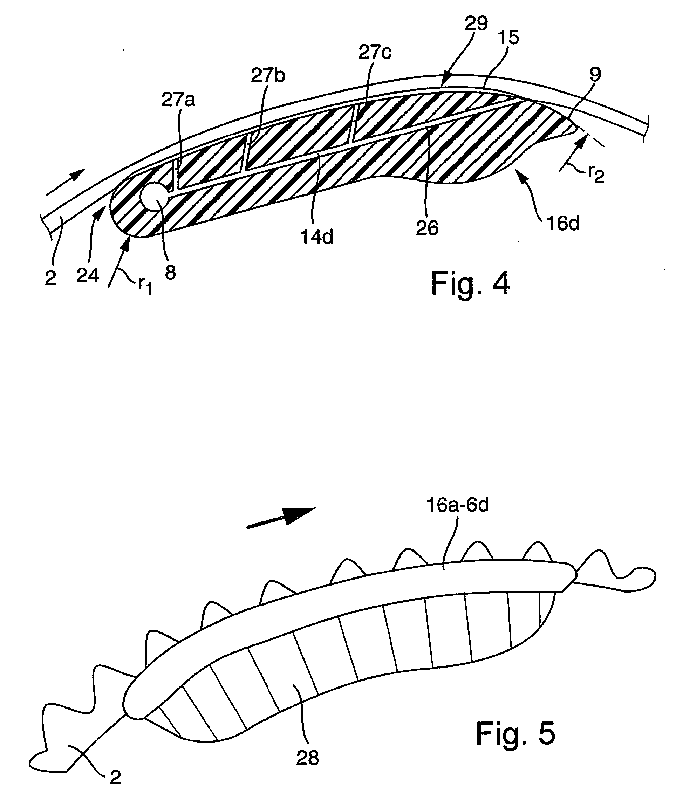

Die Schiene 16c gemäß Figur 3 ist versehen mit einer Schmiermittelnut 14c, die endseitig an dem zur Eintrittszone 21 gerichteten Ende einen Schmiermittelsammler 22 bildet. Der in einer Draufsicht eine dreieckförmige Kontur bildende Schmiermittelsammler 22 erstreckt sich weitestgehend über die gesamte Breite, die sich zwischen den Borden 17a, 17b einstellt und der sich danach auf die Breite der Schmiermittelnut 14c verjüngt. Der Schmiermittelsammler 22 wirkt mit einer externen Spritzdüse 23 zusammen, von der ausgehend Schmiermittel gezielt in den Schmiermittelsammler 22 eingespritzt wird. Damit wird das Schmiermittel breitflächig in einen Schmiermitteleintrag 24 eingeleitet wird, der wie in Figur 4 dargestellt, sich zwischen der Schiene 16c und dem Zugmittel einstellt. Die Führungsfläche 9 gemäß Figur 3 ist weiterhin mit einer schuppenartig gestalteten Makrostruktur 25 versehen, die eine verbesserte Schmiermittelanhaftung bewirkt, was sich vorteilhaft auf die Bildung des Druckspaltes 15 auswirkt.

Die im Längsschnitt abgebildete Schiene 16d gemäß Figur 4 verdeutlicht insbesondere den Verlauf der Schmiermittelkanäle 14d. Ausgangspunkt der Schmiermittelkanäle 14d ist das Drehlager 8 der Schiene 16d, dem zur Schmierung Schmiermittel der Druckumlaufschmierung der Brennkraftmaschine zugeführt wird. Von dort wird das Schmiermittel zum Aufbau des Druckspaltes 15 in der U-förmigen Aufnahme 29 weiter gefördert. Die Schmiermittelkanäle 14d umfassen eine Längsbohrung 26, die von dem Drehlager 8 ausgehend, sich nahezu über die gesamte Länge der Schiene 16d erstreckt und endseitig in die Führungsfläche 9 mündet. Dabei verbinden Stichbohrungen 27a bis 27c jeweils beabstandet zueinander die Längsbohrung 26 mit der Führungsfläche 9. Zur Vermeidung eines scharfkantigen Übergangs zwischen dem Zugmittel 2 und der Schiene 16d, weist diese an beiden Endseiten Radien "r₁" und "r₂" auf, die kleiner sind als die zugehörigen Radien des Zugmittels 2.

Die Wirksamkeit der erfindungsgemäßen Schiene 16a bis 16d unterstreichend zeigt die Figur 5 einen sich einstellenden Druckverlauf 28 der U-förmigen Aufnahme 29 der erfindungsgemäßen Schienen 16a bis 16d, welcher sich über die Länge der Stirnfläche 11 einstellt. Im Bereich der Eintrittszone 21 des Zugmittels 2 bildet sich demnach der größte Druck an der Innenseite des Zugmittels 2, welcher sich über die Länge der Stirnfläche 11 langsam abbaut, ohne dass dieser völlig aufgehoben ist und das Zugmittel 2 an der Führungsfläche 9 anliegt.

### Bezugszahlen

- 1: Zugmitteltrieb
- 2: Zugmittel
- 3: Antriebsorgan
- 4: Abtriebsorgan
- 5: Spannsystem
- 6: Schiene
- 7: Federmittel
- 8: Drehlager
- 9: Führungsfläche
- 10: Stößel
- 11: Stirnfläche
- 12: Bord
- 13: Schmiermittelkanal
- 14a: Schmiermittelnut
- 14b: Schmiermittelnut
- 14c: Schmiermittelnut
- 15: Druckspalt
- 16a: Schiene
- 16b: Schiene
- 16c: Schiene
- 16d: Schiene
- 17a: Bord
- 17b: Bord
- 18a: Seitenfläche
- 18b: Seitenfläche
- 19a: Leckspalt
- 19b: Leckspalt
- 20: Querrille
- 21: Eintrittszone
- 22: Schmiermittelsammler
- 23: Spritzdüse
- 24: Schmiermitteleintrag
- 25: Makrostruktur
- 26: Längsbohrung
- 27a: Stichbohrung
- 27b: Stichbohrung
- 27c: Stichbohrung
- 28: Druckverlauf
- 29: Aufnahme

## Patentansprüche

1. Schiene für einen Zugmitteltrieb (1), die als Spannschiene oder Führungsschiene ausgebildet, zur Anlage an einem Zugmittel (2), wie eine Kette oder ein Riemen, wobei eine zur Führung des Zugmittels (2) bestimmte Führungsfläche (9) der Schiene (6; 16a bis 16d) von seitlichen Borden (12; 17a, 17b) begrenzt ist und im Betriebszustand das Zugmittel (2) in einer von einem Schmiermittel benetzten U-förmigen Aufnahme (29) über einen Schmiermittelfilm bereichsweise kontaktlos zu der Schiene (6; 16a bis 16d) geführt ist, wobei sich über die Länge der Schiene (6; 16a bis 16d) zwischen dem Zugmittel (2) und der Führungsfläche (9) ein Druckspalt (15) und beidseitig des Zugmittels (2) gegenüber den Borden (12; 17a, 17b) ein Leckspalt (19a, 19b) einstellt, **dadurch gekennzeichnet, dass** eine Bordhöhe (b) ≤ einer Zahnfußhöhe (z) des als Riemen ausgebildeten Zugmittels (2) entspricht und die Führungsfläche (9) der Schiene (6; 16a bis 16d) zumindest eine Schmiermittelnut (14a bis 14c) einschließt, die an einem Ende als ein Schmiermittelsammler (22) ausgebildet ist.

2. Schiene nach Anspruch 1, bei der das Schmiermittel in einer von der Führungsfläche (9) der Schiene (16a bis 16d) und dem Zugmittel (2) radial begrenzten Zone der U-förmigen Aufnahme (29) über einen Schmiermitteleintrag (24) zugeführt wird.

3. Schiene nach Anspruch 1, bei der zumindest ein Teilbereich der U-förmigen Aufnahme (29) eine strukturierte Oberfläche aufweist.

4. Schiene nach Anspruch 3, bei der die Oberfläche der Führungsfläche (9) zumindest bereichsweise als Makrostruktur (25) ausgebildet ist.

5. Schiene nach Anspruch 3, bei der die Oberfläche der Führungsfläche (9) eine schuppenartig gestaltete Makrostruktur (25) aufweist.

6. Schiene nach Anspruch 1, die einem Zugmittel (2) zugeordnet ist, das an einer mit der Schiene (16a bis 16d) zusammenwirkenden Seite eine Makrostruktur aufweist.

7. Schiene nach Anspruch 1, bei der das Schmiermittel versetzt zu einem Ende der Schiene (16a bis 16d) in die U-förmige Aufnahme (29) eingeleitet wird.

8. Schiene nach Anspruch 1, wobei die eine Längsrille bildende Schmiermitteinut (14a bis 14c) der Führungsfläche (9) sich weitestgehend über die gesamte Länge der Schiene (16a bis 16d) erstreckt.

9. Schiene nach Anspruch 1, wobei die Führungsfläche (9) der Schiene (16a bis 16d) ein oder mehrere Längsrillen, in Verbindung mit Querrillen ergänzend oder alternativ zu der Schmiermittelnut (14a bis 14c) einschließt.

10. Schiene, die um ein Drehlager (8) schwenkbar angeordnet ist und die beabstandet zu dem Drehlager (8) mit einem Federmittel (7) zusammenwirkt nach Anspruch 1, wobei das Schmiermittel über das Drehlager (8) in zumindest einen Schmiermittelkanal (13) gelangt und von dort über zumindest eine Stichbohrung (27a bis 27c) in die Schmiermittelnut (14a bis 14c) in die U-förmige Aufnahme (29) geleitet wird.

11. Schiene nach Anspruch 1, wobei das Schmiermittel über eine separat zu der Schiene (18a bis 16d) positionierte Spritzdüse (23) zugeführt wird.

12. Schiene nach Anspruch 1, die zwei Bauteile umfasst, einen Grundträger, der über dass Drehlager (8) schwenkbar angeordnet ist sowie einen mit dem Zugmittel (2) zusammenwirkenden Gleitkörper.

13. Schiene nach Anspruch 15, deren aus Kunststoff hergestellter Gleitkörper insbesondere formschlüssig an dem aus Aluminium hergestellten Grundträger befestigt ist.

14. Schiene nach Anspruch 1, mit einem einteiligen Aufbau, wobei als Werkstoff Aluminium oder Kunststoff vorgesehen ist.

15. Schiene nach Anspruch 1, bei der sich im eingebauten Zustand ein Leckspalt (19a, 19b) zwischen den Borden (17a, 17b) und dem Zugmittel (2) einstellt, wobei der Wert "s" ≤ 0,3 mm beträgt.

16. Schiene nach Anspruch 1, bei der sich im Betriebszustand ein Druckspalt (15) zwischen der Führungsfläche (9) und dem Zugmittel (2) einstellt, wobei der Druckspalt (15) einen Wert "h" ≤ 0,1 mm aufweist.

17. Schiene nach Anspruch 1, wobei die Borde (17a, 17b) an beiden Enden der Schiene (16a bis 16d) jeweils zueinander entgegengesetzt nach außen gespreizt sind.

18. Schiene nach Anspruch 1, wobei die Führungsfläche (9) der Schiene (16a bis 16d) an beiden Enden Radien "r₁, r₂" aufweist, die kleiner sind als zugehörige Radien des Zugmittelverlaufs.

## Claims

1. Rail for a flexible drive (1) which is configured as a tensioning rail or a guide rail for contact on a drawing means (2), such as a chain or belt, a guide face (9) of the rail (6; 16a to 16d) being delimited by lateral rims (12; 17a, 17b), which guide face (9) is intended to guide the drawing means (2) and in the operating state, the drawing means (2) is guided in regions in a contactless manner with respect to the rail (6; 16a to 16d) via a lubricant film in a U-shaped receptacle (29) which is wetted by a lubricant, a pressure gap (15) being formed over the length of the rail (6; 16a to 16d) between the drawing means (2) and the guide face (9), and a leakage gap (19a, 19b) being formed on both sides of the drawing means (2) opposite the rims (12; 17a, 17b), **characterized in that** a rim height (b) is ≤ a tooth base height (z) of the drawing means (2) which is configured as a belt and the guide face (9) of the rail (6; 16a to 16d) encloses at least one lubricant groove (14a to 14c), which is configured at one end as a lubricant collector (22).

2. Rail according to Claim 1, in which the lubricant is fed via a lubricant inlet (24) in a zone of the U-shaped receptacle (29), which zone is delimited radially by the guide face (9) of the rail (16a to 16d) and the drawing means (2).

3. Rail according to Claim 1, in which at least one part region of the U-shaped receptacle (29) has a structured surface.

4. Rail according to Claim 3, in which the surface of the guide face (9) is configured at least in regions as a macrostructure (25).

5. Rail according to Claim 3, in which the surface of the guide face (9) has a macrostructure (25) of overlapping design.

6. Rail according to Claim 1, which is assigned to a drawing means (2) which has a macrostructure on one side which interacts with the rail (16a to 16d).

7. Rail according to Claim 1, in which the lubricant is introduced into the U-shaped receptacle (29) offset towards one end of the rail (16a to 16d).

8. Rail according to Claim 1, the lubricant groove (14a to 14c), which forms a longitudinal groove, of the guide face (9) extending as far as possible over the entire length of the rail (16a to 16d).

9. Rail according to Claim 1, the guide face (9) of the rail (16a to 16d) enclosing one or more longitudinal grooves in conjunction with transverse grooves in addition to or as an alternative to the lubricant groove (14a to 14c).

10. Rail which is arranged such that it can pivot about a rotational bearing (8) and which interacts with a spring means (7) in a manner which is spaced apart from the rotational bearing (8), according to Claim 1, the lubricant passing via the rotational bearing (8) into at least one lubricant channel (13) and being conducted from there via at least one branch bore (27a to 27c) into the lubricant groove (14a to 14c) and into the U-shaped receptacle (29).

11. Rail according to Claim 1, the lubricant being fed via a spray nozzle (23) which is positioned separately from the rail (16a to 16d).

12. Rail recording to Claim 1 which comprises two components, a basic carrier which is arranged such that it can pivot over the rotational bearing (8), and a sliding body which interacts with the drawing means (2).

13. Rail according to Claim 15, the sliding body of which, which is manufactured from plastic, is fastened to the basic carrier which is manufactured from aluminium, in particular in a form-fitting manner.

14. Rail according to Claim 1, having a single-piece construction, aluminium or plastic being provided as material.

15. Rail according to Claim 1, in which, in the installed state, a leakage gap (19a, 19b) is formed between the rims (17a, 17b) and the drawing means (2), the value "s" being ≤ 0.3 mm.

16. Rail according to Claim 1, in which, in the operating state, a pressure gap (15) is formed between the guide face (9) and the drawing means (2), the pressure gap (15) having a value "h" of ≤ 0.1 mm.

17. Rail according to Claim 1, the rims (17a, 17b) being spread outwards in each case in an opposite direction to one another at both ends of the rail (16a to 16d).

18. Rail according to Claim 1, the guide face (9) of the rail (16a to 16d) having radii "r₁, r₂" at both ends, which radii are smaller than associated radii of the drawing means profile.

## Revendications

1. Rail pour un entraînement à moyen de traction (1), qui est réalisé en tant que rail tendeur ou rail de guidage en vue de l'application contre un moyen de traction (2), tel qu'une chaîne ou une courroie, une surface de guidage (9) du rail (6 ; 16a à 16d) prévue pour guider le moyen de traction (2) étant limitée par des bords latéraux (12 ; 17a, 17b) et, dans l'état de fonctionnement, le moyen de traction (2) étant guidé en partie sans contact vers le rail (6 ; 16a à 16d) dans un logement en forme de U (29) mouillé par un lubrifiant par le biais d'un film de lubrifiant, un interstice de pression (15) se formant sur la longueur du rail (6 ; 16a à 16d) entre le moyen de traction (2) et la surface de guidage (9), et de chaque côté du moyen de traction (2), en face des bords (12 ; 17a, 17b), un interstice de fuite (19a, 19b) s'établissant, **caractérisé en ce qu'**une hauteur de bord (b) est ≤ à une hauteur de base de dent (z) du moyen de traction (2) réalisé sous forme de courroie et la surface de guidage (9) du rail (6 ; 16a à 16d) inclut au moins une rainure pour lubrifiant (14a à 14c), laquelle est formée à une extrémité sous forme de collecteur de lubrifiant (22).

2. Rail selon la revendication 1, dans lequel le lubrifiant est acheminé par le biais d'une amenée de lubrifiant (24) dans une zone du logement en forme de U (29) limitée radialement par la surface de guidage (9) du rail (16a à 16d) et par le moyen de traction (2).

3. Rail selon la revendication 1, dans lequel au moins une région partielle du logement en forme de U (29) présente une surface structurée.

4. Rail selon la revendication 3, dans lequel la surface de la surface de guidage (9) est réalisée au moins en partie en tant que macrostructure (25).

5. Rail selon la revendication 3, dans lequel la surface de la surface de guidage (9) présente une macrostructure (25) de forme imbriquée.

6. Rail selon la revendication 1 qui est associé à un moyen de traction (2) qui présente sur un côté coopérant avec le rail (16a à 16d) une macrostructure.

7. Rail selon la revendication 1 dans lequel le lubrifiant est introduit dans le logement en forme de U (29) de manière décalée par rapport à une extrémité du rail (16a à 16d).

8. Rail selon la revendication 1 dans lequel une rainure de lubrifiant (14a à 14c) de la surface de guidage (9), formant une gorge longitudinale, s'étend essentiellement sur toute la longueur du rail (16a à 16d).

9. Rail selon la revendication 1 dans lequel la surface de guidage (9) du rail (16a à 16d) comprend une ou plusieurs gorges longitudinales en liaison avec des gorges transversales en complément de la rainure de lubrifiant (14a à 14c) ou à la place de cette dernière.

10. Rail, disposé de manière à pouvoir pivoter autour d'un palier rotatif (8) et qui coopère à distance du palier rotatif (8) avec un moyen de ressort (7) selon la revendication 1, le lubrifiant parvenant par le biais du panier rotatif (8) dans au moins un canal de lubrifiant (13) et étant conduit de là par le biais d'au moins un alésage de branchements (27a à 27c) dans la rainure de lubrifiant (14a à 14c) dans le logement en forme de U (29).

11. Rail selon la revendication 1, dans lequel le lubrifiant est acheminé par le biais d'une buse d'injection (23) positionnée séparément par rapport au rail (16a à 16d).

12. Rail selon la revendication 1 comprenant deux composants, un support de base, qui est disposé de manière à pouvoir pivoter par le biais du palier rotatif (8) ainsi qu'un corps de glissement coopérant avec le moyen de traction (2).

13. Rail selon la revendication 15 dont le corps de glissement fabriqué en plastique est resté fixé notamment par engagement par coopération de forme au support de base fabriqué en aluminium.

14. Rail selon la revendication 1, comprenant une structure unitaire, le matériau utilisé étant de l'aluminium ou du plastique.

15. Rail selon la revendication 1 dans lequel, à l'état monté, un interstice de fuite (19a, 19b) est resté formé entre les bords (17a, 17b) et le moyen de traction (2), la valeur "s" étant ≤ 0, 3 mm.

16. Rail selon la revendication 1 dans lequel dans l'état de fonctionnement, un interstice de pression (15) se forme entre la surface de guidage (9) et le moyen de traction (2), l'interstice de pression (15) ayant une valeur "h" ≤ 0,1 mm.

17. Rail selon la revendication 1, dans lequel les bords (17a, 17b) aux deux extrémités du rail (16a à 16d) sont écartés vers l'extérieur à l'opposé l'un de l'autre.

18. Rail selon la revendication 1, dans lequel la surface de guidage (9) du rail (16a à 16d) présente, aux deux extrémités, des rayons "r₁, r₂", qui sont inférieurs aux rayons associés de la dimension du moyen de traction.
